(19) Europäisches Patentamt / European Patent Office / Office européen des brevets

(11) EP 4 790 987 A1

(12) **EUROPEAN PATENT APPLICATION**
published in accordance with Art. 153(4) EPC

(43) Date of publication:
**12.08.2026 Bulletin 2026/33**

(21) Application number: **23954611.2**

(22) Date of filing: **06.10.2023**

(51) International Patent Classification (IPC):
***H04N 19/117*** $^{(2014.01)}$ ***H04N 19/103*** $^{(2014.01)}$
***H04N 19/70*** $^{(2014.01)}$

(52) Cooperative Patent Classification (CPC):
**H04N 19/103; H04N 19/117; H04N 19/70**

(86) International application number:
**PCT/CN2023/123115**

(87) International publication number:
**WO 2025/073097 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Shenzhen TCL New Technology Co., Ltd**
**Shenzhen, Guangdong 518052 (CN)**

(72) Inventors:
- **QIN, Hongdong**
  **Shenzhen, Guangdong 518052 (CN)**
- **DING, Keqin**
  **Shenzhen, Guangdong 518052 (CN)**
- **XU, Zhuowei**
  **Shenzhen, Guangdong 518052 (CN)**

(74) Representative: **Murgitroyd & Company**
**165-169 Scotland Street**
**Glasgow G5 8PL (GB)**

(54) **IMAGE OR VIDEO PROCESSING METHOD, CODER, DECODER AND CODING/DECODING SYSTEM**

(57) Disclosed in the present disclosure are an image or video processing method, a coder, a decoder and a coding/decoding system. The method comprises: acquiring a first candidate parameter list, wherein the first candidate parameter list is a candidate parameter list of a cross-component prediction merge mode CCPMERGE, the first candidate parameter list comprises a plurality of candidate parameters, and at least one of the plurality of candidate parameters includes a parameter for predictive boosting filtering (PBF); and on the basis of a selected candidate parameter, predicting chroma information of a current block in an image so as to generate a chroma prediction block. The present disclosure can simultaneously retain the respective advantages of CCPMERGE and PBF, thereby improving the coding and decoding performance.

Obtaining a first candidate parameter list, wherein the first candidate parameter list is a candidate parameter list of a cross-component prediction merge mode (CCPMERGE), the first candidate parameter list comprises a plurality of candidate parameters, and at least one of the plurality of candidate parameters includes a prediction boosting filter (PBF) parameter. — S110

↓

Performing prediction on chroma information of a current block in an image based on a selected candidate parameter to generate a chroma prediction block. — S120

FIG. 6



Processed by Luminess, 75001 PARIS (FR)

## Description

TECHNICAL FIELD

The present disclosure relates to the field of image processing, and particularly relates to an image or video processing method, an encoder, a decoder, and a coding and decoding system.

BACKGROUND

In image and video compression, an image or a frame of a video typically consists of three color components: a luma component (Y) and two chroma components (Cb and Cr). Each component is represented as a data matrix. The data matrix of each component is divided into blocks associated with specific coding parameters. For any block of a particular component, the block may be a square or rectangular block having a side length that is a power of two. In the other two components, there exists a unique corresponding block having the same spatial position.

An encoder operates according to a specific coding order. Specifically, the encoder first processes the luma component and then processes the chroma components. The processing begins from the upper-left corner and proceeds in a raster scan order from left to right and from top to bottom.

In video coding standards such as Versatile Video Coding (VVC), intra prediction refers to a method of predicting a current block using previously coded blocks within the same picture. When performing intra prediction for a current block, the encoder sequentially tests multiple predefined intra prediction modes. A prediction block is generated based on reconstructed values of previously coded blocks, and the generated prediction blocks are compared in order to select a best prediction mode. A difference between the current block and the best prediction block (referred to as a residual) is also encoded. By transmitting signaling indicating the best prediction mode together with the residual, a decoder can reconstruct the same reconstructed image or video as obtained by the encoder.

When coding a chroma component, the luma component of the same picture has already been coded, and the reconstructed luma block may be used as reference samples for coding the chroma component. Therefore, when coding a current block of the chroma component, a relationship between the luma component and the chroma component in nearby coded blocks may be analyzed. The relationship may then be applied to a current block of the luma component to predict a current block of the chroma component. This approach is generally referred to as cross-component prediction (CCP). However, existing CCP methods still have various deficiencies and therefore require further improvements.

SUMMARY

The present disclosure provides an image or video processing method, wherein the method comprises: obtaining a first candidate parameter list, wherein the first candidate parameter list is a candidate parameter list associated with a cross-component prediction merge mode (CCPMERGE), the first candidate parameter list comprises a plurality of candidate parameters, and at least one candidate parameter of the plurality of candidate parameters is associated with a prediction boosting filter (PBF); and predicting chroma information of a current block in a picture according to a selected candidate parameter to generate a chroma prediction block.

Optionally, the method further comprises: reordering candidate parameters in the first candidate parameter list according to a predetermined rule to obtain a second candidate parameter list, wherein generating the chroma prediction block comprises generating the chroma prediction block according to a candidate parameter selected from the second candidate parameter list.

Optionally, the method further comprises: truncating the first candidate parameter list or the second candidate parameter list to obtain a third candidate parameter list; wherein generating the chroma prediction block comprises generating the chroma prediction block according to a candidate parameter selected from the third candidate parameter list.

Optionally, the method further comprises: reordering the candidate parameters in the first candidate parameter list according to a predetermined rule and truncating the reordered candidate parameter list; or truncating the first candidate parameter list and reordering the truncated candidate parameter list according to a predetermined rule.

Optionally, the first candidate parameter list comprises identification information of the prediction boosting filter, and the identification information is used to indicate whether one or more candidate parameters in the first candidate parameter list are associated with the prediction boosting filter or support the prediction boosting filter.

Optionally, the method further comprises: determining whether a candidate parameter in the first candidate parameter list is associated with the prediction boosting filter or supports the prediction boosting filter, wherein the determining is based on at least one of:

a coding mode of the candidate parameter;

a coding cost corresponding to a combination of the cross-component prediction merge mode and the prediction boosting filter; and
a statistical characteristic of a prediction block.

Optionally, when the coding mode of the candidate parameter corresponds to a multi-model cross-component linear model (MM-CCLM) or a multi-model convolution cross-component model (MM-CCCM), it is determined whether the candidate parameter supports the prediction boosting filter; otherwise, it is not necessary to determine whether the candidate parameter supports the prediction boosting filter.

Optionally, when the coding cost of the candidate parameter is smaller than one or more thresholds, the candidate parameter is used without the prediction boosting filter; and/or when the coding cost falls within different threshold intervals, different prediction boosting filters are introduced.

Optionally, the coding cost is calculated based on a sum of absolute differences between a result obtained by applying the prediction boosting filter to a reference region of a trial reconstructed chroma image generated using the candidate parameter and a corresponding reference region of an actually reconstructed chroma image.

Optionally, when the statistical characteristic of the prediction block is smaller than one or more thresholds, the candidate parameter is used without the prediction boosting filter; and/or when the statistical characteristic falls within different threshold intervals, different prediction boosting filters are introduced.

Optionally, during reordering of the candidate parameters in the first candidate parameter list, the candidate parameters are uniformly sorted according to coding costs corresponding to candidate parameters using the prediction boosting filter and candidate parameters not using the prediction boosting filter.

Optionally, during reordering of the candidate parameters in the first candidate parameter list, the candidate parameters are divided into different candidate parameter sets, different sorting rules are applied to the candidate parameter sets, and the candidate parameters of the candidate parameter sets are merged and sorted.

Optionally, during truncating of the first candidate parameter list or the second candidate parameter list, it is determined whether candidate parameters in the first candidate parameter list or the second candidate parameter list are included in the third candidate parameter list based on a coding cost threshold.

Optionally, during truncating of the first candidate parameter list or the second candidate parameter list, it is determined whether candidate parameters in the first candidate parameter list or the second candidate parameter list are included in the third candidate parameter list based on a length of the candidate parameter list.

Optionally, when the selected candidate parameter is associated with the prediction boosting filter, a chroma prediction result is generated based on the selected candidate parameter, and the prediction boosting filter is applied to the chroma prediction result to generate the chroma prediction block.

Optionally, when the selected candidate parameter is associated with the prediction boosting filter, the prediction boosting filter is applied to a luma block, and the chroma prediction block is generated based on the luma block to which the prediction boosting filter is applied and the selected candidate parameter.

The present disclosure further provides an image or video processing method. The method comprises:

obtaining statistical information of a current prediction block;
updating a filter threshold based on the statistical information and a previously determined filter threshold;
selecting a prediction boosting filter based on the updated filter threshold; and
reconstructing an image using the selected prediction boosting filter.

Optionally, the statistical information comprises variation degrees of the current prediction block in a horizontal direction, a vertical direction, a diagonal direction, and/or an anti-diagonal direction.

Optionally, the filter threshold is dynamically adjusted based on an exponential moving average method.

Optionally, during selection of the prediction boosting filter, the statistical information of the current prediction block is compared with the updated filter threshold, and the prediction boosting filter is selected based on a comparison result.

Optionally, during selection of the prediction boosting filter, the prediction boosting filter is selected from at least one of filters corresponding to the following directions: a horizontal direction, a vertical direction, a diagonal direction, an anti-diagonal direction, and a non-directional filter.

The present disclosure further provides an encoder, comprising a processor configured to execute instructions to perform the method described above.

The present disclosure further provides a decoder, comprising a processor configured to execute instructions to perform the method described above.

The present disclosure further provides a coding and decoding system, comprising an encoding device and a decoding device. The encoding device comprises a first processor configured to execute instructions to perform the method described above, and the decoding device comprises a second processor configured to execute instructions to

perform the method described above.

The beneficial effects of the present disclosure are as follows.

In the image or video processing method proposed by the present disclosure, candidate parameters in the candidate parameter list of the cross-component prediction merge mode (CCPMERGE) include parameters associated with a prediction boosting filter (PBF). Therefore, during execution of CCPMERGE, the prediction boosting filter (PBF) may be used during reconstruction. As a result, the deficiency in the conventional CCPMERGE process, in which cross-component prediction for a current block is performed only without incorporating LBCCP, can be overcome. Accordingly, the present disclosure enables the advantages of both the CCPMERGE and the prediction boosting filter (PBF) to be utilized simultaneously, thereby producing a gain in the coding and decoding process and further improving coding and decoding performance. In addition, the prediction boosting filter may use filters implemented according to the present disclosure, which can provide improved gain for prediction.

On the other hand, the present disclosure reconstructs an image using a prediction boosting filter. Specifically, the image or video processing method of the present disclosure comprises obtaining statistical information of a current prediction block; updating a filter threshold based on the statistical information and a previously determined filter threshold; selecting a prediction boosting filter based on the updated filter threshold; and reconstructing the image using the selected prediction boosting filter. Compared with conventional techniques that employ a single-strength, isotropic low-pass filter (for example, LBCCP), embodiments of the present disclosure utilize statistical information of the prediction block (for example, texture strength and directional characteristics) to select a more suitable filter, thereby providing improved prediction gain.

## BRIEF DESCRIPTION OF THE DRAWINGS

In order to more clearly illustrate the technical solutions in embodiments of the present disclosure, the drawings required to be used in the description of the embodiments will be briefly introduced below. Obviously, the drawings described below merely illustrate some embodiments of the present disclosure. For those of ordinary skill in the art, other drawings may also be obtained based on these drawings without creative effort.

FIG. 1A is a block diagram of a video coding system according to an embodiment of the present disclosure.

FIG. 1B is a block diagram of a video decoding system according to an embodiment of the present disclosure.

FIG. 2 illustrates three color components in a color image or a video frame according to an embodiment of the present disclosure.

FIG. 3 illustrates a luma component and chroma components in a color image or a video frame according to an embodiment of the present disclosure.

FIG. 4 illustrates local boosting cross-component prediction (LBCCP).

FIG. 5 illustrates a decoding process related to cross-component prediction in the prior art.

FIG. 6 is a flowchart of an image or video processing method according to an embodiment of the present disclosure.

FIG. 7 is a flowchart of an image or video processing method according to another embodiment of the present disclosure.

FIG. 8 is a flowchart of an image or video processing method according to yet another embodiment of the present disclosure.

FIG. 9 illustrates a cross-component prediction merge process and a cross-component prediction process according to an embodiment of the present disclosure.

FIG. 10 illustrates that a CCPMERGE parameter includes an indication of whether the prediction boosting filter (PBF) is supported, according to an embodiment of the present disclosure.

FIG. 11 illustrates a unified list parameter sorting rule according to an embodiment of the present disclosure.

FIG. 12 illustrates an independent list parameter sorting rule according to an embodiment of the present disclosure.

FIG. 13 illustrates an operation of truncating a CCPMERGE parameter list according to an embodiment of the present disclosure.

FIG. 14 is a flowchart of another image or video processing method according to an embodiment of the present disclosure.

## DETAILED DESCRIPTION OF THE PRESENT DISCLOSURE

In order to more clearly illustrate the embodiments of the present disclosure or related technologies, a brief overview of several embodiments will be provided below. Obviously, the illustrations described below are merely some embodiments of the present disclosure. For those of ordinary skill in the art, other embodiments may be derived based on these illustrations without creative effort.

In order to better understand the technical solutions proposed in the embodiments of the present disclosure, it is

helpful to begin with a brief introduction to several basic concepts: a video coding system and a video decoding system.

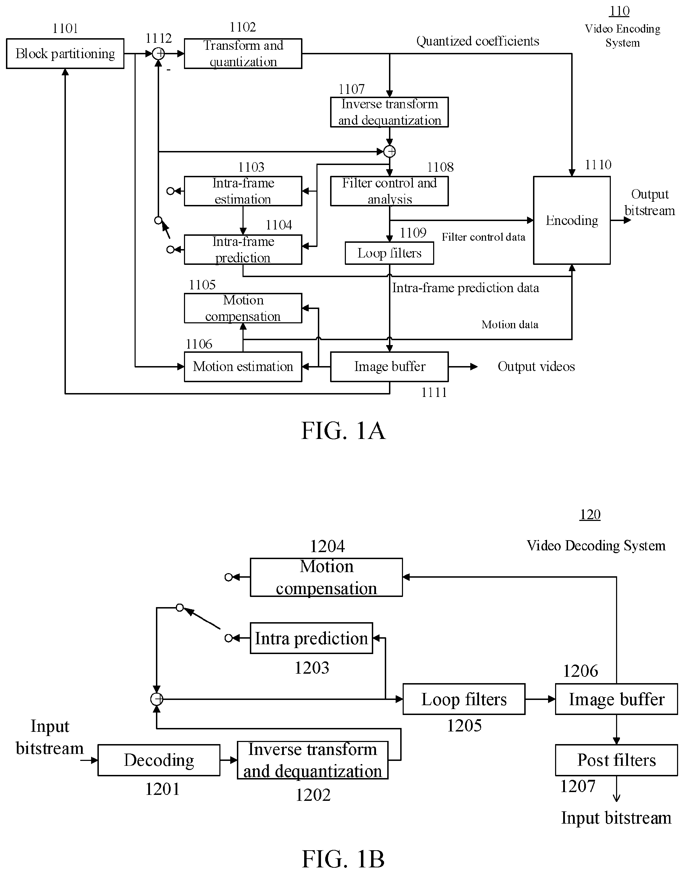

Embodiments of the present disclosure relate to a video coding system. As shown in FIG. 1A, a video coding system 110 includes multiple units: a block partition unit 1101, a transform and quantization unit 1102, an intra estimation unit 1103, an intra prediction unit 1104, a motion compensation unit 1105, a motion estimation unit 1106, an inverse transform and inverse quantization unit 1107, a filter control analysis unit 1108, a loop filtering unit 1109, a coding unit 1110, an image buffer unit 1111, and a subtractor 1112.

Starting from an original video signal, an image frame is divided into coding tree units (CTUs) (hereinafter referred to as "blocks") by the block partition unit 1101. For each current block, the subtractor 1112 subtracts a prediction block output by the intra prediction unit 1103 or the motion compensation unit 1104 from the current block to generate residual pixel information, thereby obtaining a residual block. The transform and quantization unit 1102 performs transform and quantization processing on the residual pixel information obtained through intra prediction or inter prediction (motion compensation). The transform converts the residual pixel information from a pixel domain to a transform domain, and the obtained transform coefficients are quantized to further reduce the bit rate. The intra estimation unit 1103 performs intra estimation, and the intra prediction unit 1104 performs intra prediction for a reconstructed video block. Motion estimation performed by the motion estimation unit 1106 generates motion vectors capable of estimating motion of the reconstructed video block. Based on the determined motion vectors, motion compensation is performed by the motion compensation unit 1105. After an intra prediction mode is determined, the intra prediction unit 1104 provides selected intra prediction data to the coding unit 1110. The motion estimation unit 1106 sends calculated motion vector data to the coding unit 1110. The inverse transform and inverse quantization unit 1107 reconstructs a reconstructed video block and a reconstructed residual block in the pixel domain. The loop filtering unit 1109 is controlled by the filter control analysis unit 1108 to eliminate artifact effects in the reconstructed block. The coding unit 1110 adds the reconstructed residual block to the prediction block stored in the encoded image buffer unit 1111 to generate a reconstructed block. The coding unit 1110 encodes various coding parameters and quantized transform coefficients into a bitstream and outputs the bitstream of the video signal. The encoded image buffer unit 1111 stores reconstructed blocks as reference blocks. As video image coding proceeds, new reconstructed blocks are continuously generated and stored in the encoded image buffer unit 1111.

Embodiments of the present disclosure further provide a video decoding system. As shown in FIG. 1B, a video decoding system 120 includes multiple units: a decoding unit 1201, an inverse transform and inverse quantization unit 1202, an intra prediction unit 1203, a motion compensation unit 1204, a loop filtering unit 1205, a decoded image buffer unit 1206, and a post-filtering unit 1207.

The video coding system 110 encodes video frames to obtain an output bitstream. The video coding system 110 transmits the bitstream to the video decoding system 120. The video decoding system 120 receives the bitstream representing video frames in an encoded format (i.e., compressed format). In the video decoding system 120, the decoding unit 1201 processes the bitstream to obtain decoded transform coefficients. The inverse transform and inverse quantization unit 1202 processes the transform coefficients to generate a residual block in the pixel domain. The intra prediction unit 1203 generates an intra prediction block for a current video decoding block according to a determined intra prediction mode and previously decoded block data of the current video decoding block. The motion compensation unit 1204 determines inter prediction information for the current video decoding block and generates an inter prediction block by parsing motion vectors and other related syntax elements. Finally, a decoded video block is generated by adding the residual block generated by the inverse transform and inverse quantization unit 1202 and a corresponding prediction block generated by the intra prediction unit 1203 or the motion compensation unit 1204. In order to improve video quality, the decoded video block is filtered by the loop filtering unit 1205 to eliminate artifact effects. The decoded video block is then stored in the decoded image buffer unit 1206 as a reference block for subsequent intra prediction or motion compensation and used to reproduce and reconstruct the video signal. After processing by the post-filtering unit 1207, the reconstructed video signal may optionally be further processed to obtain a more suitable or enhanced visual experience.

## Cross-Component Prediction Mode

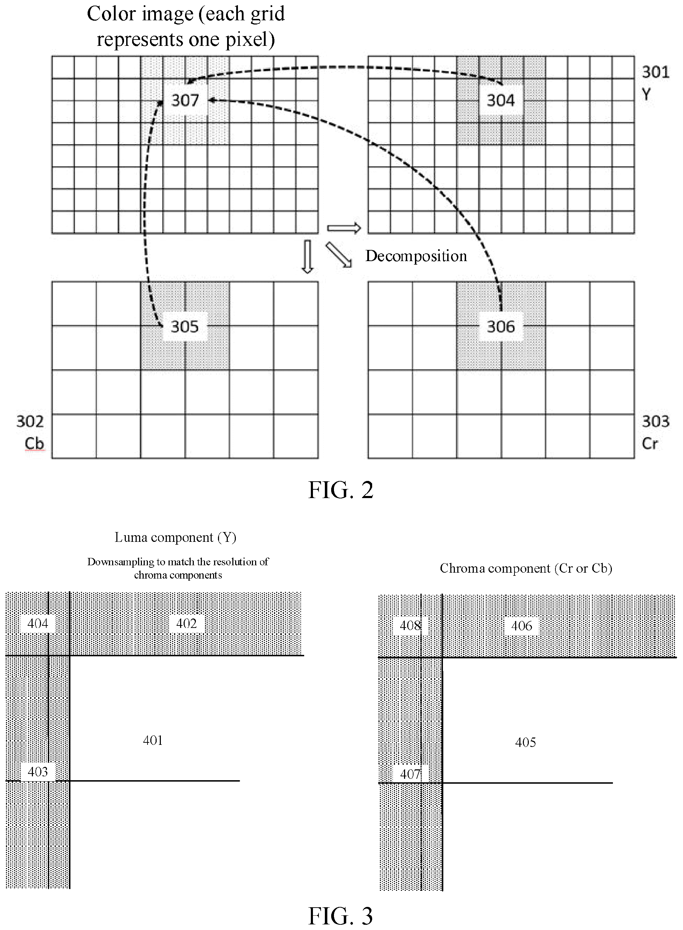

The data structure of a color image is shown as follows. As illustrated in FIG. 2, in a color image or a frame of a color video, the image or frame typically includes three color components, namely a luma component Y 301 and two chroma components Cb 302 and Cr 303. Each component is represented as a data matrix. The data matrix of each component is divided into blocks associated with specific coding parameters. For example, a block 304 of the luma component Y, a block 305 of the chroma component Cb, and a block 306 of the chroma component Cr correspond to a spatial position 307 in the color image. In video coding, the luma component is typically processed first, followed by the chroma components.

The luma component of a color image or video frame has a higher resolution in both the vertical and horizontal directions than any chroma component. Specifically, the number of pixels in each direction is typically twice that of the chroma component. In order to reflect the spatial correspondence between the luma component and the chroma component during the intra prediction process, the luma component is downsampled during intra prediction to match

the resolution of the chroma component, so that all components have an equal number of pixels in both the vertical and horizontal directions.

When coding the chroma component, the luma component in the same image has already been coded, and a reconstructed luma block can be used as reference samples for coding the chroma component. Therefore, when coding a current block of the chroma component, a relationship between the luma component and the chroma component in nearby coded blocks may be analyzed, and the relationship may be applied to a current block of the luma component to predict a current block of the chroma component. This approach is generally referred to as cross-component prediction (CCP). The principle of cross-component intra prediction is to use a reconstructed image region of one color component to predict an image region of another color component in the same image. As shown in FIG. 3, a current block 405 of a chroma component (which may be Cb or Cr) is about to be coded. At this time, a current block 401 of the luma component Y at the same spatial position as the current block 405 has already been coded and reconstructed. Reference blocks 402, 403, and 404 corresponding to the current block 401 also correspond spatially to reference blocks 406, 407, and 408 corresponding to the current block 405, and these blocks have already been coded and reconstructed. The reference blocks 406, 407, and 408 may constitute a reference region for the current block 405. Alternatively, a subset of the reference blocks 406, 407, and 408 may constitute the reference region for the current block 405. The principle of cross-component prediction is to calculate a relationship between the reference blocks 402, 403, and 404 of the luma component and the reference blocks 406, 407, and 408 of the chroma component, and then apply the relationship to the current block 401 of the luma component to calculate a predicted value of the chroma component for the current block 405.

When performing intra coding for a chroma image, a cross-component linear model (CCLM) may be used as one prediction mode. CCLM is a method that uses a reconstructed luma image (or a reconstructed luma block) to predict a chroma image (or a chroma block), and it provides significant compression gain especially when the luma component and the chroma component are highly correlated.

When CCLM is used to predict a chroma block Cb or Cr, the following equation may be used:

$$Pred_C(x,y) = \alpha \cdot Rec'_L(x,y) + \beta$$

where $Pred_C(x,y)$ denotes a pixel value being predicted in the chroma block Cb or Cr, $Rec'_L(x,y)$ denotes a pixel value of a reconstructed luma block after being adjusted to the same size as the chroma block, and (x,y) denotes coordinates of the pixel. In a 4:2:0 image format, since both the width and height of the luma image are twice those of the chroma image, $Rec'_L$ is typically obtained by downsampling the reconstructed luma image $Rec_L$.

The parameters $\alpha$ and $\beta$ of the cross-component linear model (CCLM) are obtained based on a numerical relationship between a luma image reference region and a chroma image reference region. The calculation method is as follows:

$$\alpha = \frac{M(t_L(x,y) - M(t_L)) \times M(t_C(x,y) - M(t_C))}{M(t_L(x,y) - M(t_L)) \times M(t_L(x,y) - M(t_L))}$$

$$\beta = M(t_C) - \alpha M(t_L)$$

where $t_L$ denotes a pixel value in the luma image reference region, $t_C$ denotes a pixel value in the chroma image reference region currently being coded, and (x,y) denotes coordinates of a pixel. M(X) denotes an average value of samples X within a corresponding reference region.

In another embodiment, when the CCLM is used to predict a chroma block Cb or Cr, the following equation may be used:

$$Pred_C(x,y) = \begin{cases} \alpha_0 \cdot Rec'_L(x,y) + \beta_0, Rec'_L(x,y) \geq M(t_L) \\ \alpha_1 \cdot Rec'_L(x,y) + \beta_1, Rec'_L(x,y) < M(t_L) \end{cases}$$

where $\alpha_0$ and $\beta_0$ represent parameters $\alpha$ and $\beta$ obtained using only a subset of pixels in the luma image reference region whose pixel values are not smaller than $M(t_L)$, and $\alpha_1$ and $\beta_1$ represent parameters $\alpha$ and $\beta$ obtained using a subset composed of the remaining pixels in the luma image reference region. This method is referred to as a multi-model cross-component linear model (Multi-Model CCLM, hereinafter referred to as MM-CCLM).

When performing intra coding of a chroma image, a convolutional cross-component model (CCCM) may also be used as one prediction mode. CCCM is a method that uses a reconstructed luma image (or a reconstructed luma block) to predict a chroma image (or a chroma block), and it provides significant compression gain particularly when the luma component and the chroma component are highly correlated.

When CCCM is used to predict a chroma block Cb or Cr, the following equation may be used:

$Pred_C(x,y) = c_0 \cdot Rec'_L(x, y) + c_1 \cdot Rec'_L(x - 1,y) + c_2 \cdot Rec'_L(x + 1,y) + c_3 \cdot Rec'_L(x,y -1) + c_4 \cdot Rec'_L(x, y + 1) + c_5 \cdot [Rec'_L(x, y)]^2 + c_6 \cdot 2^{D-1}$

where D denotes a bit depth of an image.

The parameter set c = $\{c_0, c_1, ..., c_6\}$ of CCCM is obtained as follows:

$$\underset{\{c_0,c_1,\ldots,c_6\}}{\operatorname{argmin}} \sum_{(x,y)\in R} [Pred_C(x,y) - Rec_C(x,y)]^2$$

where R denotes a set of all coordinates included in a corresponding chroma image reference region, and $Rec_C(x,y)$ denotes a pixel value of a reconstructed chroma image. The numerical optimization problem may be solved using a Gaussian elimination method or other approximation algorithms.

Similar to the above MM-CCLM, a parameter set $c_G = \{c_{G0}, c_{G1}, ..., c_{G6}\}$ may be obtained using a subset of pixels in the luma image reference region whose pixel values are not smaller than $M(t_L)$, and a parameter set $c_L = \{c_{L0}, c_{L1}, ..., c_{L6}\}$ may be obtained using a subset composed of the remaining pixels in the luma image reference region. When predicting a chroma block Cb or Cr, the following equations may be used.

In an event that $Rec'_L(x, y) \geq M(t_L)$,

$Pred_C(x,y) = c_{G0} \cdot Rec'_L(x,y) + c_{G1} \cdot Rec'_L(x - 1,y) + c_{G2} \cdot Rec'_L (x + 1, y) + c_{G3} \cdot Rec'_L (x, y -1) + c_{G4} \cdot Rec'_L (x, y + 1) + c_{G5} \cdot [Rec'_L(x, y)]^2 + c_{G6} \cdot 2^{D-1}$

In an event that $Rec'_L(x,y) < M(t_L)$,

$Pred_C(x,y) = c_{L0} \cdot Rec'_L(x, y) + C_{L1} \cdot Rec'_L(x - 1,y) + C_{L2} \cdot Rec'_L(x + 1,y) + c_{L3} \cdot Rec'_L(x,y - 1) + c_{L4} \cdot Rec'_L(x, y + 1) + c_{L5} \cdot [Rec'_L(x, y)]^2 + c_{L6} \cdot 2^{D-1}$

This method is referred to as a multi-model convolutional cross-component model (Multi-Model CCCM, hereinafter referred to as MM-CCCM).

Local Boosting Cross-Component Prediction

After a chroma image is predicted using MM-CCLM or MM-CCCM, the generated predicted chroma block may be processed by Local-boosting Cross-Component Prediction (LBCCP) to generate a new predicted chroma block. This method applies a two-dimensional filter to the originally predicted chroma block to obtain a new predicted block.

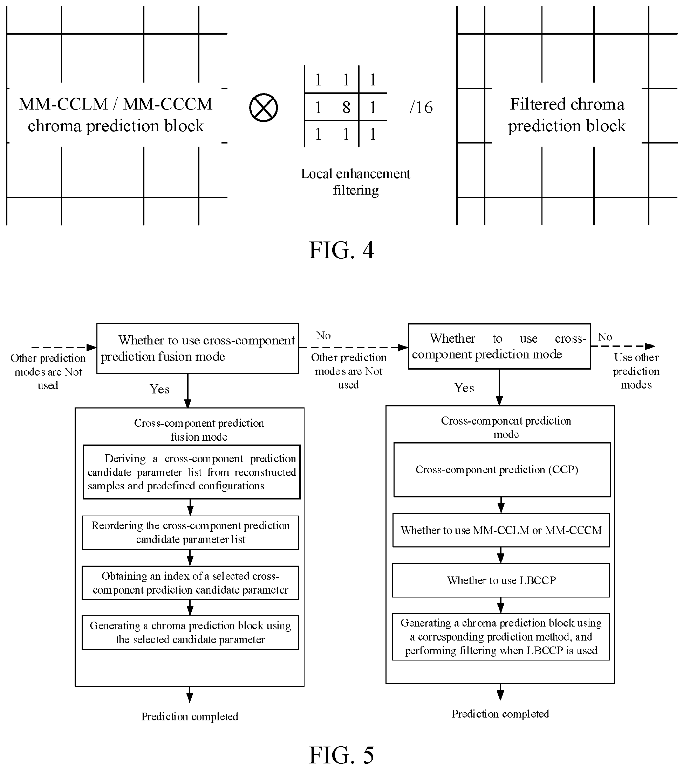

As shown in FIG. 4, the filtering calculation is expressed as: $Pred'_C(x, y) = [Pred_C(x - 1, y - 1) + Pred_C(x,y - 1) + Pred_C(x + 1, y - 1) + Pred_C(x - 1, y) + 8 \times Pred_C(x,y) + Pred_C (x + 1, y) + Pred_C(x - 1, y + 1) + Pred_C (x, y + 1) + Pred_C(x + 1, y + 1) + 8] » 4$

where $Pred'_C$ denotes a filtered prediction value and >> denotes a right-shift operation.

Cross-Component Prediction Merge Mode

In addition to directly deriving numerical relationships between nearby luma and chroma samples from reference regions around a current block, another technique referred to as a merge mode may be used. The main principle of the merge mode is to search previously coded data for blocks that used the same prediction mode, obtain their mode parameters, and derive a merge list. The decoder reproduces the merge-list construction process performed by the encoder so that a complete set of mode parameters can be obtained from an index value. When the merge mode is applied to cross-component prediction, a cross-component prediction merge mode (CCPMERGE) is formed. Specifically, blocks that previously used a cross-component prediction mode are searched in historical coding data, and parameters corresponding to those blocks are combined to form a parameter list. The decoder can determine a prediction mode and corresponding parameters for a current block based on an index value.

FIG. 5 illustrates a decoding process related to cross-component prediction in the prior art.In the prior art, as shown in FIG. 5, when the cross-component prediction merge mode (CCPMERGE) is used, the following steps are performed during the CCPMERGE decoding process:

Deriving a cross-component prediction candidate parameter list from reconstructed images and predefined configurations;
Reordering the cross-component prediction candidate parameter list;
Obtaining an index of a cross-component prediction candidate parameter;
Generating a chroma prediction block using the selected candidate parameter.

If the cross-component prediction mode (CCP) is used, the following steps are performed during the CCP decoding process:

Decoding the cross-component prediction mode;
If the prediction mode is MM-CCLM or MM-CCCM, further determining whether LBCCP is used during decoding;
Generating a chroma prediction block using a corresponding prediction method, and if LBCCP is used, filtering the chroma prediction block to generate a final chroma prediction block.

In the decoding process of the prior art shown in FIG. 5, the execution of CCPMERGE does not consider LBCCP. In other words, during decoding, if it is determined that CCPMERGE is used, the entire CCP decoding process, including the LBCCP processing, is immediately skipped. Even if a block referenced by a CCPMERGE index originally used an LBCCP-enhanced MM-CCLM or MM-CCCM model, the prediction for the current block is still performed only using MM-CCLM or MM-CCCM without LBCCP. From a conceptual perspective, LBCCP and CCPMERGE are not conflicting techniques. The former enhances relationships among neighboring pixels within a prediction block and reduces local noise, whereas the latter searches previously coded data to identify blocks similar to the current block. The gains obtained from these two techniques in prediction coding are neither conflicting nor overlapping. Therefore, combining these two techniques should provide additive coding gains.

Furthermore, in the decoding process of the prior art illustrated in FIG. 5, LBCCP uses a single-strength, isotropic low-pass filter. A filter with a single strength may not adapt well to filtering requirements of images having different texture strengths. In addition, isotropic filtering may smooth the prediction block while simultaneously damaging an original texture direction of the image, thereby introducing negative effects that are unfavorable for improving coding efficiency. Therefore, for a specific image, more suitable filter coefficients are often required. By utilizing local statistical characteristics of cross-component prediction, particularly characteristics such as texture strength and direction, adaptive filter selection can be achieved so as to obtain better prediction gain.

Embodiments of the present disclosure are mainly applied to the intra prediction unit 1104 of the video coding system 110 and the intra prediction unit 1203 of the video decoding system 120. If a better prediction result can be obtained by using the intra prediction method provided in the embodiments of the present application, the quality of video decoding and reconstruction can also be improved.

The video decoding system 120 receives a bitstream representing video frames. Therefore, the intra prediction unit 1203 of the video decoding system 120 may obtain reference luma blocks, reference chroma blocks, and a current luma block to predict a current chroma block. The intra prediction unit 1203 may perform an intra prediction method identical to that performed by the intra prediction unit 1103.

Embodiments of the present disclosure provide an image or video processing method, which may be applied to an image or video encoding device or an image or video decoding device. Functions implemented by the method may be realized by a processor in the image or video encoding device or the image or video decoding device by invoking program code. The program code may be stored in a computer storage medium (for example, a non-volatile computer storage medium). Therefore, the image or video encoding device or the image or video decoding device includes a processor and a storage medium.

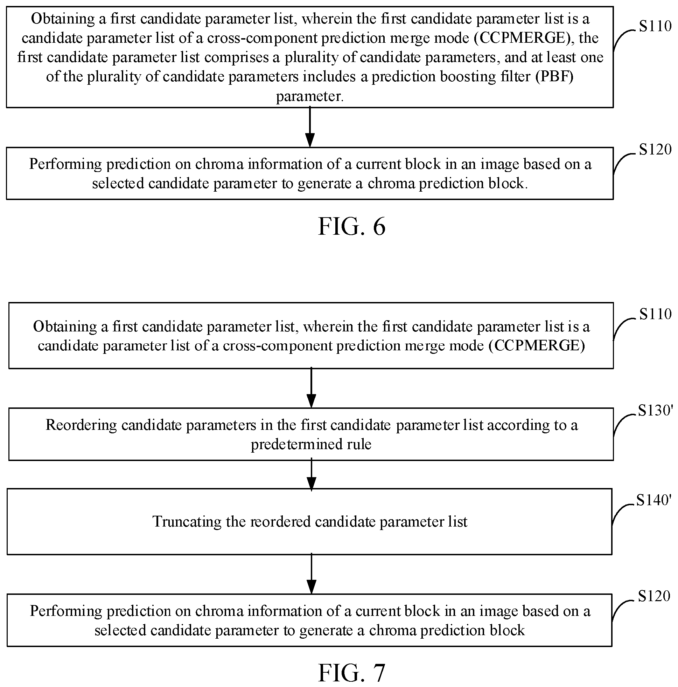

FIG. 6 is a flowchart of an image or video processing method according to an embodiment of the present disclosure. The image or video processing method may be a cross-component intra prediction method that uses reconstructed reference blocks in the same image or video frame to predict a current block. As shown in FIG. 6, the method includes Step S110 to Step S120.

At S110, a first candidate parameter list is obtained, where the first candidate parameter list is a candidate parameter list associated with the cross-component prediction merge mode (CCPMERGE), the first candidate parameter list includes a plurality of candidate parameters, and at least one candidate parameter among the plurality of candidate parameters includes a parameter associated with a prediction boosting filter (PBF).

In this step, the first candidate parameter list is obtained. The first candidate parameter list corresponds to the CCPMERGE candidate parameter list described above. For example, in an event that a reconstructed image block is encoded using a multi-model cross-component linear model (MM-CCLM), candidate parameters in the first candidate parameter list may include the parameters $\alpha_0$, $\beta_0$, $\alpha_1$, and $\beta_1$ described above. In an event that a reconstructed image block is encoded using a multi-model convolutional cross-component model (MM-CCCM), candidate parameters in the first candidate parameter list may include parameters $c_{G0}$, $c_{G1}$, ..., $c_{G6}$ and $c_{L0}$, $c_{L1}$, ..., $c_{L6}$ described above. In the first

candidate parameter list, multiple reconstructed image blocks corresponding to the cross-component prediction (CCP) mode may contribute multiple sets of parameters (for example, twelve parameter sets), which serve as the candidate parameters. Each candidate parameter set in the first candidate parameter list corresponds to an index value, and each index value indicates a corresponding candidate parameter set.

Furthermore, among the plurality of candidate parameters in the first candidate parameter list, at least one candidate parameter includes parameters associated with the prediction boosting filter (PBF). In other words, some candidate parameters in the first candidate parameter list may include parameters associated with the prediction boosting filter PBF, while other candidate parameters may not use or support the prediction boosting filter; or all candidate parameters in the first candidate parameter list may include parameters associated with the prediction boosting filter, or may support the prediction boosting filter.

The prediction boosting filter described above may be the local-boosting cross-component prediction (LBCCP) filter mentioned previously, or a newly designed filter developed according to the present disclosure that considers statistical characteristics of image blocks (for example, texture characteristics and directional characteristics, which will be described later). The present disclosure does not impose particular limitations on a type, size, or characteristics of the prediction boosting filter. When a candidate parameter set includes parameters associated with the prediction boosting filter (PBF), it indicates that when the candidate parameter set is used during image reconstruction, the prediction boosting filter is applied so as to obtain a final reconstructed image.

At Step S120, chroma information of a current block in an image is predicted according to a selected candidate parameter to generate a chroma prediction block.

As described above, the principle of cross-component prediction is to calculate a relationship between reference blocks of a luma component and reference blocks of a chroma component, and apply the relationship to a current block of the luma component so as to calculate a predicted value of the chroma component of the current block. In the cross-component prediction merge mode, blocks that previously used a cross-component prediction mode are searched from historical coding data, and parameters of the prediction mode used by such blocks are applied to the luma component of the current block to predict the chroma component of the current block, that is, chroma information of the current block is predicted to generate a chroma prediction block.

In this step, the chroma prediction block is generated using the selected candidate parameter. The selected candidate parameter may be a candidate parameter including parameters associated with the prediction boosting filter (PBF) described in Step S110, that is, the prediction boosting filter is used during generation of the chroma prediction block. Alternatively, the selected candidate parameter may be a candidate parameter that does not use or does not support the prediction boosting filter (PBF), that is, the prediction boosting filter is not used during generation of the chroma prediction block.

The selected candidate parameter may be a candidate parameter in the first candidate parameter list that generates an optimal chroma prediction block. The optimal chroma prediction block may be a chroma prediction block having the smallest difference from a current chroma block. In other words, a residual between the optimal chroma prediction block and the current chroma block may achieve optimal coding efficiency.

In the image or video processing method proposed in the present disclosure, candidate parameters in the candidate parameter list of the cross-component prediction merge mode (CCPMERGE) include parameters associated with the prediction boosting filter (PBF). Therefore, during execution of CCPMERGE, the prediction boosting filter (PBF) may be used for reconstruction. As a result, the deficiency in the prior art, in which cross-component prediction without LBCCP is performed when predicting a current block during execution of CCPMERGE, can be overcome. Accordingly, the present disclosure enables advantages of both CCPMERGE and the prediction boosting filter (PBF) to be retained simultaneously, thereby providing gain in the coding and decoding process and further improving coding and decoding performance. In addition, the prediction boosting filter may employ filters implemented according to the present disclosure, thereby providing improved gain for prediction.

In some embodiments, the image or video processing method of the present disclosure further comprises the following steps.

Step S130: reordering candidate parameters in the first candidate parameter list according to a predetermined rule to obtain a second candidate parameter list.

In this step, the candidate parameters in the first candidate parameter list are reordered to obtain the second candidate parameter list. After reordering, candidate parameters in the first candidate parameter list may be the same as or different from candidate parameters in the second candidate parameter list. The second candidate parameter list may include only a subset of candidate parameters from the first candidate parameter list, or may include candidate parameters that do not appear in the first candidate parameter list. In addition, the candidate parameters may be sorted according to corresponding coding costs. The coding cost may be calculated based on a sum of absolute differences between a trial reconstructed chroma image reference region obtained using the candidate parameter and an actual reconstructed chroma image reference region (which will be described later). If the candidate parameter uses the prediction boosting filter, then when calculating the coding cost of the candidate parameter, the sum of absolute differences between the actual

reconstructed chroma image reference region and a result obtained by applying the prediction boosting filter to the trial reconstructed chroma image reference region generated using the candidate parameter may be considered.

Candidate parameters in the first candidate parameter list have different probabilities of producing an optimal reconstructed image. Therefore, when encoding index values corresponding to the candidate parameters, variable-length coding may be used, such as truncated unary coding. By reordering the candidate parameters, candidate parameters that are more likely to produce the optimal reconstructed image may obtain index values corresponding to shorter code lengths, thereby reducing code length. For each current block reconstructed using the cross-component prediction merge mode (CCPMERGE), candidate parameter reordering may be performed once so as to reduce the code length required for encoding index values and achieve higher coding efficiency.

Step S120 of generating the chroma prediction block comprises:

Step S121: generating the chroma prediction block according to a candidate parameter selected from the second candidate parameter list.

In this step, a chroma prediction block may be generated using the reordered candidate parameters, that is, a candidate parameter selected from the second candidate parameter list. The process of generating the chroma prediction block using the candidate parameter is the same as described above and will not be repeated here.

In some embodiments, the image or video processing method of the present disclosure further comprises the following steps.

Step S140: truncating the first candidate parameter list or the second candidate parameter list to obtain a third candidate parameter list.

In this step, the first candidate parameter list or the second candidate parameter list may be truncated to obtain the third candidate parameter list. In other words, the number of candidate parameters in the third candidate parameter list is smaller than the number of candidate parameters in the first candidate parameter list or the second candidate parameter list. Specifically, whether candidate parameters in the first candidate parameter list or the second candidate parameter list are included in the third candidate parameter list may be determined based on a coding cost threshold or a parameter list length. Candidate parameters in the first candidate parameter list or the second candidate parameter list whose coding costs are lower than the coding cost threshold may be included in the third candidate parameter list. Alternatively, only a predetermined number of candidate parameters may be maintained in the candidate parameter list, and the number may depend on a configured parameter list length.

The truncation operation applied to the candidate parameter list can reduce the number of candidate parameters involved in calculations, thereby reducing computational load during encoding and decoding processes and improving coding and decoding efficiency. In addition, truncation can reduce storage overhead for storing candidate parameters, thereby reducing requirements on system storage capacity.

Step S120 of generating the chroma prediction block comprises:

Step S122: generating the chroma prediction block according to a candidate parameter selected from the third candidate parameter list.

In this step, a chroma prediction block may be generated using the truncated candidate parameters, that is, a candidate parameter selected from the third candidate parameter list. The process of generating the chroma prediction block using the candidate parameter is the same as described above and will not be repeated here.

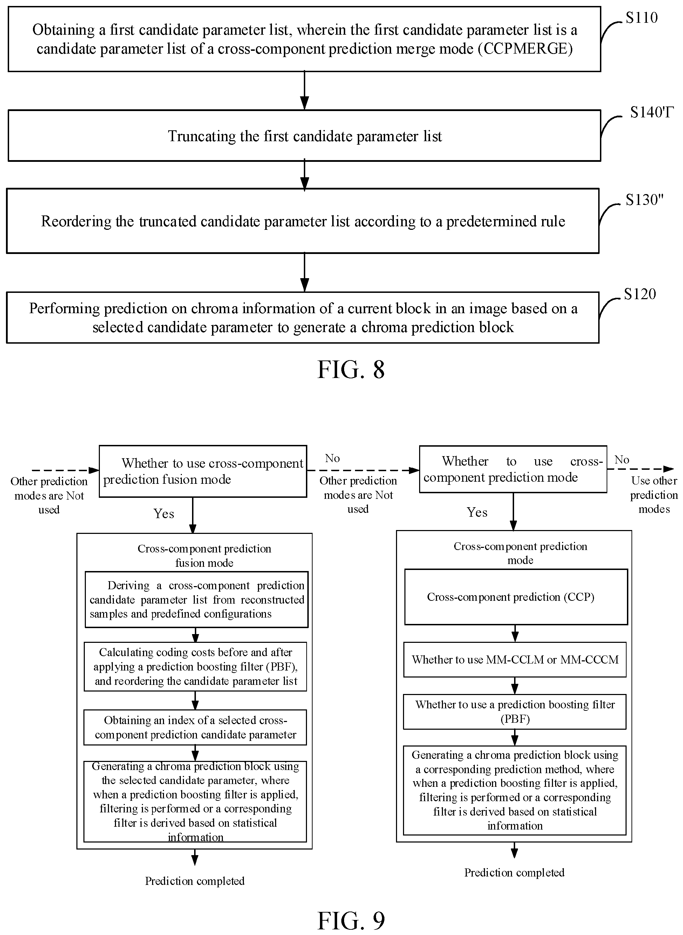

In some embodiments, as shown in FIG. 7, candidate parameters in the first candidate parameter list may first be reordered according to a predetermined rule (Step S130'), and then the reordered candidate parameter list may be truncated (Step S140'). In other embodiments, as shown in FIG. 8, the first candidate parameter list may first be truncated (Step S140"), and then the truncated candidate parameter list may be reordered according to a predetermined rule (Step S130").

In some embodiments, a cross-component prediction merge mode list may include candidate parameters associated with the prediction boosting filter (PBF), and all candidate parameters in the cross-component prediction merge mode list may be reordered according to a predetermined rule. In other embodiments, the cross-component prediction merge mode list may include both candidate parameters associated with the prediction boosting filter (PBF) and candidate parameters not associated with the prediction boosting filter, and all candidate parameters in the cross-component prediction merge mode list may be reordered according to a predetermined rule. In yet other embodiments, the cross-component prediction merge mode list may include only candidate parameters not associated with the prediction boosting filter (PBF). In this case, all candidate parameters in the cross-component prediction merge mode list may be reordered according to a predetermined rule, and in subsequent steps the prediction boosting filter may be added to some of the reordered candidate parameters.

FIG. 9 is a schematic flow diagram of a cross-component prediction merge process and a cross-component prediction process according to embodiments of the present disclosure. As shown in FIG. 9, during execution of the cross-component prediction merge mode (CCPMERGE), a processing operation of a prediction boosting filter (PBF) is newly introduced. The cross-component prediction candidate parameter list is reordered according to a prediction coding cost calculated before and after introducing the prediction boosting filter (PBF). If a selected candidate parameter is associated

with the prediction boosting filter, the prediction boosting filter is applied during generation of the chroma prediction block. Alternatively, a prediction boosting filter to be used may be derived based on statistical information of the prediction block. During execution of the cross-component prediction (CCP) process, a prediction mode to be used, such as a multi-model cross-component linear model (MM-CCLM) or a multi-model convolutional cross-component model (MM-CCCM), may be determined according to parameter contents. If a prediction boosting filter is adopted, the prediction boosting filter is applied during generation of the chroma prediction block. Alternatively, a prediction boosting filter to be used may be derived based on statistical information of the prediction block.

The signaling process of the prediction boosting filter (PBF) is described in detail below.

Under the CCPMERGE mode, in order to support the prediction boosting filter (PBF), two implementation approaches are provided, namely direct signaling and derived extension. Direct signaling refers to directly indicating whether candidate parameters in a CCPMERGE candidate parameter list support the prediction boosting filter (PBF). Derived extension refers to determining, through derivation, whether candidate parameters in the CCPMERGE candidate parameter list support the prediction boosting filter (PBF). In practical implementations, a combination of direct signaling and derived extension may also be adopted. The direct signaling and the derived extension are described in detail below.

Direct Signaling

In some embodiments, for the direct signaling case, the first candidate parameter list includes identification information of the prediction boosting filter. The identification information indicates whether one or more candidate parameters in the first candidate parameter list are associated with parameters of the prediction boosting filter or support the prediction boosting filter. The following description provides further details.

In this scheme, whether one or more parameters in the CCPMERGE candidate parameter list support the prediction boosting filter (PBF) is indicated. The implementation may adopt the following example. Other implementations representing the same meaning are also included in the scope of the present disclosure and will not be further elaborated.

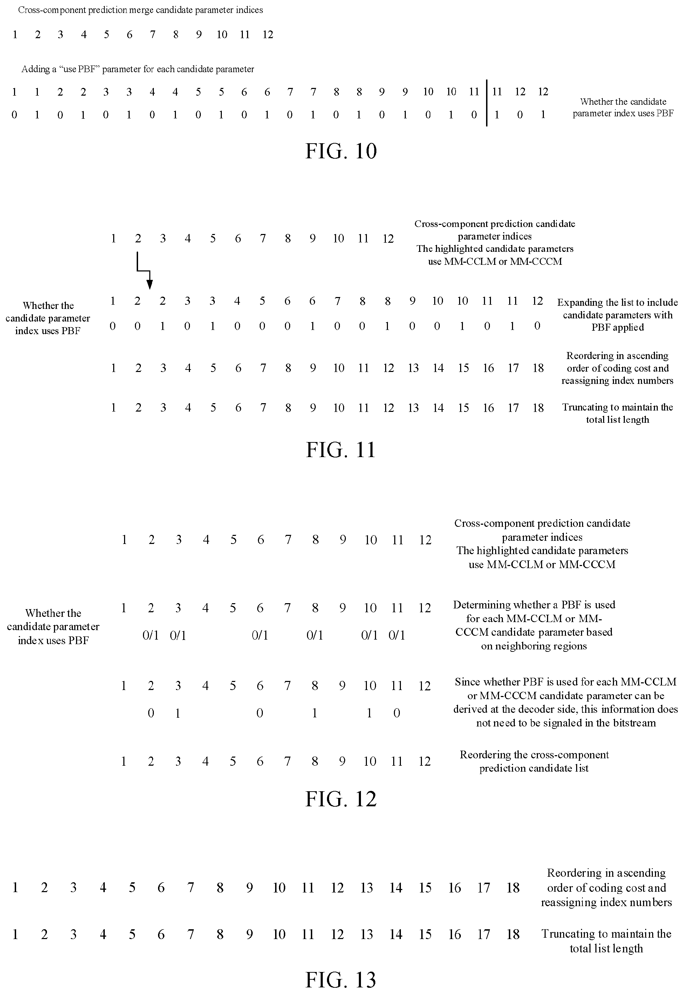

A CCPMERGE parameter includes an indicator indicating whether the prediction boosting filter (PBF) is supported. If the indicator indicates "use PBF," a PBF operation is introduced during the CCPMERGE calculation process. If the indicator indicates "PBF not applicable," the PBF operation is not introduced during the CCPMERGE calculation process. For example, the indicator may be represented by 0 or 1, where 1 indicates "use PBF" and 0 indicates "do not use PBF," as shown in FIG. 10. Alternatively, if a CCPMERGE parameter includes a PBF parameter, it indicates that the prediction boosting filter is supported; otherwise, the prediction boosting filter is not supported. In addition, an encoder needs to write into a bitstream both a candidate parameter index and signaling indicating whether the prediction boosting filter is used.

Indicating whether multiple parameters in CCPMERGE support the prediction boosting filter (PBF): multiple CCPMERGE parameters may share a single PBF indicator. For example, one CCPMERGE parameter list corresponds to one PBF indicator. If the indicator is valid, it indicates that candidate parameters in the CCPMERGE parameter list support the PBF operation; otherwise, the PBF operation is not supported. In addition, an encoder needs to write into a bitstream both a candidate parameter index and signaling indicating whether the prediction boosting filter (PBF) is used.

Derived Extension

In some embodiments, for the derived extension case, it may be determined whether candidate parameters in the first candidate parameter list are associated with parameters of the prediction boosting filter or support the prediction boosting filter based on at least one of: a coding mode of a candidate parameter; a coding cost corresponding to a combination of the candidate parameter in the cross-component prediction merge mode and the prediction boosting filter; and a statistical characteristic of a prediction block. Further details are provided below.

In this scheme, whether one or more parameters in the CCPMERGE parameter list support and use the prediction boosting filter (PBF) is determined according to a predetermined rule. The following examples are provided for illustration. Other implementations having the same meaning are also included in the scope of the present disclosure and will not be described in further detail.

Rule 1: derivation according to contents of the CCPMERGE parameters.

If a coding mode of a candidate parameter in the CCPMERGE list is a specific mode, then it is determined whether the candidate parameter in the list supports the PBF operation; otherwise, the candidate parameter does not support the PBF operation. For example, if the candidate parameter in the CCPMERGE list corresponds to a multi-model cross-component linear model (MM-CCLM) or a multi-model convolutional cross-component model (MM-CCCM), then it is determined whether the candidate parameter supports the PBF operation. If the candidate parameter in the list does not correspond to MM-CCLM or MM-CCCM, then the PBF operation is not included. Whether the candidate parameter supports the PBF operation may be derived based on a coding cost or by other methods, and thus will not be further elaborated here.

Rule 2: derivation according to a coding cost of the CCPMERGE parameter. When a coding cost of a

CCPMERGE parameter reaches a certain threshold, the PBF operation is to be included; otherwise, the PBF operation is not included. The threshold described here may include one or more thresholds. In addition, the PBF operation described here may include multiple different types of PBF, without limitation. The coding cost of the CCPMERGE parameter may be calculated based on a sum of absolute differences between a trial reconstructed chroma image reference region obtained using the CCPMERGE parameter and an actual reconstructed chroma image reference region (which will be described later).

Specifically, if a coding cost of a candidate parameter is smaller than one or more thresholds, the candidate parameter does not use the prediction boosting filter. When the coding cost of the candidate parameter falls within different threshold intervals, different prediction boosting filters are introduced.

For example, as shown in Table 1, $c_{cand}$ denotes a coding cost corresponding to a CCPMERGE candidate parameter cand, and $Th_x$ denotes an x-th cost threshold, where x is a positive integer. When $c_{cand} < Th_1$, no PBF is used. When $Th_x \leq c_{cand}$, PBF filters from a first PBF filter to an x-th PBF filter are all included in a consideration range.

Table 1

| | |
|---|---|
| $c_{cand} < Th_1$ | no PBF is used |
| $Th_1 \leq c_{cand} < Th_2$ | {no PBF, use PBF(1)} |
| $Th_2 \leq c_{cand} < Th_3$ | { no PBF, use PBF(1), use PBF(2) } |
| ... | ... |

Rule 3: derivation according to a statistical characteristic of a prediction block. When a statistical characteristic of the prediction block reaches a certain threshold, the PBF operation is to be included; otherwise, the PBF operation is not included. The threshold described here may include one or more thresholds. In addition, the PBF operation described here may include multiple different types of PBF. The derivation method is similar to the above Rule 2 and thus will not be repeated here. The statistical characteristic of the prediction block may refer to the description provided below.

Specifically, if the statistical characteristic of the prediction block is smaller than one or more thresholds, the candidate parameter does not use the prediction boosting filter. When the statistical characteristic of the prediction block falls within different threshold intervals, different prediction boosting filters are introduced.

The process of reordering candidate parameters in the CCPMERGE parameter list is described in detail below.

After the cross-component prediction candidate parameter list is constructed, the candidate parameter list may be reordered to reduce the code length required for encoding an index value. The sorting method compares, for each set of candidate parameters, a trial reconstruction result of a chroma image reference region with an actually reconstructed chroma image reference region, and calculates a sum of absolute differences. The candidate parameters are then arranged in ascending order according to the magnitude of the sum of absolute differences. After the PBF operation is introduced into the CCPMERGE mode, the parameter list includes candidate parameters associated with the PBF operation and candidate parameters not associated with the PBF operation. Therefore, a calculation method of the sum of absolute differences and a reordering rule need to be defined for the CCPMERGE parameter list after introducing the PBF operation. Example sorting rules include two modes: a unified list parameter sorting rule and an independent list parameter sorting rule, which are described as follows.

Unified List Parameter Sorting Rule

In some embodiments, for the unified list parameter sorting case, during the reordering process of candidate parameters in the CCPMERGE parameter list, the candidate parameters are sorted in a unified manner according to coding costs corresponding to candidate parameters that do not use the prediction boosting filter and candidate parameters that use the prediction boosting filter.

In this scheme, coding costs corresponding to CCPMERGE candidate parameters that use the PBF and candidate parameters that do not use the PBF are sorted together in a unified manner to obtain a new parameter list including both candidate parameters using the PBF and candidate parameters not using the PBF. The implementation includes the following steps.

Step 1: When a candidate parameter involved is marked as using the PBF, a filtering operation is applied to a trial reconstructed chroma image reference region, and then a sum of absolute differences between the filtered result and the actually reconstructed chroma image reference region is calculated as a coding cost of the candidate parameter. The filtering operation is calculated as follows:

$$Rec''_C(x, y) = [Rec'_C(x-1, y-1) + Rec'_C(x, y-1) + Rec'_C(x+1, y-1) + Rec'_C(x-1, y) + 8 \times Rec'_C(x,y) + Rec'_C(x+1, y) + Rec'_C(x-1, y+1) + Rec'_C(x, y+1) + Rec'_C(x+1, y+1) + 8] \gg 4$$

where $Rec''_C$ and $Rec'_C$ denote pixel values of a trial reconstructed chroma image reference region after filtering and before filtering, respectively, and (x,y) denotes coordinates of a pixel, where a first value represents a horizontal coordinate and a second value represents a vertical coordinate. Exceptional cases are as follows:

In an event that an upper pixel of a pixel in the trial reconstructed reference region does not belong to the reference region, all vertical coordinates y-1 in the above equation are replaced with y.

In an event that a lower pixel of the pixel in the trial reconstructed reference region does not belong to the reference region, all vertical coordinates y+1 in the above equation are replaced with y.

In an event that a left pixel of the pixel in the trial reconstructed reference region does not belong to the reference region, all horizontal coordinates x-1 in the above equation are replaced with x.

In an event that a right pixel of the pixel in the trial reconstructed reference region does not belong to the reference region, all horizontal coordinates x+1 in the above equation are replaced with x.

The sum of absolute differences between the trial reconstructed chroma image reference region and the actually reconstructed chroma image reference region is calculated as follows:

$$SAD = S(|Rec''_C - Rec_C|)$$

where SAD denotes the calculated sum of absolute differences, S(X) denotes a sum of samples X within a corresponding reference region, and Rec_C denotes pixel values of the actually reconstructed chroma image reference region.

As an alternative implementation of the above Step 1, the filtering operation described above may be applied to the luma image reference region, and then the candidate parameter coding mode is used to perform trial reconstruction of the chroma image reference region, after which the sum of absolute differences between the trial reconstructed chroma image reference region and the actually reconstructed chroma image reference region is calculated.

Step 2: When a CCPMERGE candidate parameter does not use the prediction boosting filter (PBF), a conventional scheme is used to calculate a coding cost corresponding to the candidate parameter. For example, the coding cost may be calculated as a sum of absolute differences between a trial reconstructed chroma image reference region and an actually reconstructed chroma image reference region.

Step 3: After coding costs corresponding to all candidate parameters are obtained (including coding costs of candidate parameters using the PBF and candidate parameters not using the PBF), each candidate parameter is treated as an individual entity and arranged in ascending order according to the coding cost, and an index value is assigned, as shown in FIG. 11.

Independent List Parameter Sorting Rule

In some embodiments, for the independent list parameter sorting case, during reordering of candidate parameters in the CCPMERGE parameter list, the candidate parameters are divided into different candidate parameter sets, and different sorting rules are selected for the different candidate parameter sets. Finally, candidate parameters from these candidate parameter sets are merged and sorted.

In this scheme, the CCPMERGE parameter list is divided into different candidate parameter sets according to parameter contents, different sorting rules are selected for the different candidate parameter sets, and then multiple candidate parameter sets are merged and sorted to obtain a new CCPMERGE parameter list.

For dividing the CCPMERGE parameter list into different candidate parameter sets according to parameter contents, various implementation methods may be adopted. For example, the candidate parameters may be divided according to different prediction modes, or according to whether the prediction boosting filter (PBF) is supported. Examples based on division according to prediction modes and division according to PBF support are described below.

Division according to prediction modes: Different CCPMERGE parameter sets are divided according to prediction mode categories supported by candidate parameters in the CCPMERGE parameter list. Taking the MM-CCLM mode or the MM-CCCM mode as an example, candidate parameters using the MM-CCLM mode or the MM-CCCM mode are divided into a first parameter set, and candidate parameters not using the MM-CCLM mode or the MM-CCCM mode are divided into a second parameter set.

Division according to PBF support: Different CCPMERGE parameter sets are divided according to whether candidate parameters in the CCPMERGE parameter list support the PBF operation. Candidate parameters supporting the PBF operation are divided into a first parameter set, and candidate parameters not supporting the PBF operation are divided into a second parameter set.

For selecting different sorting rules for the different candidate parameter sets, the sorting rules may include a calculation method, sorting parameter dimensions, and the like. Different implementations may be adopted. For example, sorting may be performed according to coding costs, or according to coding costs including costs of other modes. When

sorting according to coding costs, encoding or decoding costs of parameters in the parameter sets are calculated and sorted according to predetermined criteria, which may include but are not limited to ascending order or descending order. When sorting according to coding costs including costs of other modes, additional operation modes need to be introduced when calculating encoding or decoding costs of parameters in the parameter sets. For example, for the above-mentioned first parameter set supporting the MM-CCLM mode or the MM-CCCM mode, when calculating the cost of a parameter, costs corresponding to supporting the PBF and not supporting the PBF need to be calculated, and sorting is then performed according to a predetermined rule.

An example is provided below in which the CCPMERGE parameter list is divided into different CCPMERGE parameter sets according to the MM-CCLM mode or the MM-CCCM mode, thereby obtaining the above-mentioned first parameter set and second parameter set, and the sorting rule for the second parameter set is described in detail. In this scheme, a first candidate parameter set and a second candidate parameter set are generated according to the second parameter set, where the second candidate parameters are marked as using the PBF and the first candidate parameters are marked as not using the PBF. For parameters in the first candidate parameter set, a coding cost is a sum of absolute differences between a trial reconstruction result of the chroma image reference region obtained using the first candidate parameter and an actually reconstructed chroma image reference region. For parameters in the second candidate parameter set, a coding cost is calculated by applying a filtering operation to a trial reconstructed chroma image reference region obtained using the second candidate parameter and then calculating a sum of absolute differences between the filtered result and the actually reconstructed chroma image reference region.

The coding costs of parameters in the first candidate parameter set and the coding costs of parameters in the second candidate parameter set are compared. If the latter is smaller, the candidate parameter in the candidate parameter list is marked as "use PBF"; otherwise, the candidate parameter remains marked as "do not use PBF." The smaller coding cost is selected as the coding cost of the parameter.

After determining whether to use the PBF and selecting corresponding coding costs for all candidate parameters using the MM-CCLM mode or the MM-CCCM mode, unified parameter list sorting may be performed on the candidate parameter list. The entire process is shown in FIG. 12.

The process of truncating the CCPMERGE parameter list is described in detail below.

For a cross-component prediction candidate parameter list obtained after introducing the prediction boosting filter (PBF), a CCPMERGE parameter list is obtained by reordering the candidate parameters according to a predetermined rule. The CCPMERGE parameter list may then be truncated to maintain a limited CCPMERGE parameter list. The truncation may be determined according to at least one of the following methods.

In some embodiments, during the truncation of the CCPMERGE parameter list, whether candidate parameters in the CCPMERGE parameter list are included in a truncated parameter list may be determined based on a coding cost threshold, as described below.

Determination based on a threshold: A length of a target parameter list may be determined according to a threshold. For example, parameters whose coding costs are greater than or smaller than a predetermined threshold may be included in the target parameter list, while other parameters are excluded. For instance, a threshold of an encoding cost or a decoding cost may be used to determine inclusion. Different parameter lists may use the same threshold or different thresholds.

In some embodiments, during truncation of the CCPMERGE parameter list, whether candidate parameters in the CCPMERGE parameter list are included in a truncated parameter list may be determined based on a parameter list length, as described below.

Determination based on a parameter list length: For example, a length of the CCPMERGE parameter list after introducing the PBF may be maintained the same as a length of a CCPMERGE parameter list without introducing the PBF. Alternatively, the parameter list length may be determined according to a system configuration or derived from other parameters. The parameter list length may correspond to one parameter list or multiple parameter lists. Taking the case where the CCPMERGE parameter list length after introducing the PBF is maintained the same as the CCPMERGE parameter list length without introducing the PBF as an example, as shown in FIG. 13, candidate parameters at a tail of the list are discarded until a total number of candidate parameters does not exceed a configured parameter list length.

The process of generating a chroma prediction block using a selected candidate parameter and the prediction boosting filter (PBF) is described in detail below.

After a final CCPMERGE parameter list is determined, all candidate parameters in the list are traversed (that is, each candidate parameter is used to predict chroma information of a current block) to generate corresponding chroma prediction blocks. If a candidate parameter uses the PBF, the chroma prediction block may be generated using one of the following methods.

Method 1: A prediction result of the chroma information is filtered using the prediction boosting filter to generate a final chroma prediction block. Specifically, a chroma prediction result is generated based on the candidate parameter, and the prediction boosting filter is applied to the chroma prediction result to obtain the chroma prediction block.

Method 2: A prediction boosting filter is applied to a current luma block, and then the chroma prediction block is

calculated according to a coding mode indicated by the candidate parameter. Specifically, the prediction boosting filter is applied to the luma block, and the chroma prediction block is generated based on the filtered luma block and the candidate parameter.

After coding costs are calculated between all generated chroma prediction blocks and a chroma current block, a candidate parameter corresponding to a minimum coding cost is determined as an optimal cross-component prediction candidate parameter. The encoder then writes an index corresponding to the optimal cross-component prediction candidate parameter into a bitstream. After the decoder decodes the index, the selected candidate parameter and whether the prediction boosting filter (PBF) is used are obtained, and a corresponding chroma prediction block is generated.

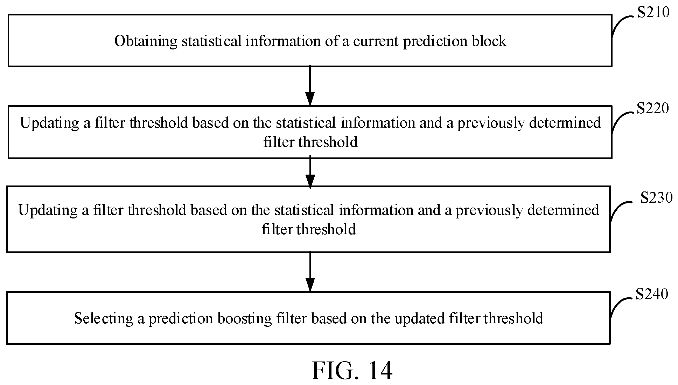

FIG. 14 is a flowchart of another image or video processing method according to embodiments of the present disclosure. The image or video processing method may be applied to cross-component prediction, but is not limited thereto. The method involves deriving a corresponding prediction boosting filter (PBF) based on statistical information of a prediction block, thereby improving prediction gain and enhancing video decoding and reconstruction quality. As shown in FIG. 14, the method includes the following steps S210 to S240.

At Step S210, statistical information of a current prediction block is obtained.

In this step, statistical information of a current prediction block in an image is obtained. Specifically, the statistical information may include a type, size, relative position, texture direction, texture complexity, edge strength, and the like of the prediction block. Based on the statistical information of the prediction block, suitability of different filters may be determined. For example, for prediction blocks with different texture complexities, filters with corresponding strengths may be selected so as to better capture texture information. For prediction blocks having strong edges, a direction-adaptive filter may be selected so as to smooth textures while preserving edge information. A degree of variation of the prediction block in a horizontal direction may be calculated as:

$$horMTV = \frac{\sum_{i=0}^{H-2}\sum_{j=0}^{W-2}|Pred_C(i,j) - Pred_C(i,j+1)|}{(H-1)(W-1)}$$

where H and W denote a pixel height and a pixel width of a current chroma prediction block, and (i,j) denotes coordinates of a pixel relative to the prediction block.

A degree of variation of the prediction block in a vertical direction may be calculated as:

$$verMTV = \frac{\sum_{i=0}^{H-2}\sum_{j=0}^{W-2}|Pred_C(i,j) - Pred_C(i+1,j)|}{(H-1)(W-1)}$$

A degree of variation of the prediction block in a diagonal direction may be calculated as:

$$diagMTV = \frac{\sum_{i=0}^{H-2}\sum_{j=0}^{W-2}|Pred_C(i,j) - Pred_C(i+1,j+1)|}{(H-1)(W-1)}$$

A degree of variation of the prediction block in an anti-diagonal direction may be calculated as:

$$reversediagMTV = \frac{\sum_{i=0}^{H-2}\sum_{j=0}^{W-2}|Pred_C(i,j+1) - Pred_C(i+1,j)|}{(H-1)(W-1)}$$

The statistical information may therefore include variation degrees of the current prediction block in the horizontal direction, vertical direction, diagonal direction, and/or anti-diagonal direction. By obtaining variation degrees in these directions, statistical characteristics such as texture characteristics and edge strength characteristics of the prediction block may be determined.

At Step S220, a filter threshold is updated based on the statistical information and a previously determined filter threshold.

In this step, the statistical information of the current prediction block may be used to update a filter selection strategy, and an appropriate prediction boosting filter (PBF) may be selected according to the updated filter selection strategy in subsequent steps. The filter selection strategy considers thresholds corresponding to respective filters and relationships between the statistical information of the prediction block and the thresholds. In one embodiment, when a directional variation degree of the prediction block falls within a certain threshold interval, a filter corresponding to that

direction is selected. If the directional variation degree of the prediction block does not fall within a given threshold interval, a default low-pass filter is selected. During implementation, an exponential moving average (EMA) method may be used to dynamically adjust the filter thresholds based on the statistical information of the prediction block and previously determined filter thresholds. An initial value of a filter threshold is given when intra prediction of a frame begins. During computation of each prediction block, the threshold may be dynamically updated according to the following equation:

$$Threshold(X)_t = \alpha \cdot X_t + (1 - \alpha) \cdot Threshold(X)_{t-1}$$

where $Threshold(X)_t$ denotes an updated filter threshold corresponding to the current prediction block, $Threshold(X)_{t-1}$ denotes a filter threshold before updating for the current prediction block, $X_t$ represents a type of statistical information of the current prediction block (e.g., horizontal or vertical variation degree), and $\alpha$is a forgetting factor where $0<\alpha<1$.

At Step S230, a prediction boosting filter selected based on the updated filter threshold.

In this step, during selection of the prediction boosting filter, statistical information of the current prediction block obtained in Step S210 is compared with the updated filter thresholds obtained in Step S220, and the prediction boosting filter is selected based on the comparison result.

In an event that horizontal variation is large and vertical variation is small, the prediction block is considered to have vertical texture characteristics. Therefore, a vertical smoothing low-pass filter is suitable in order to maintain horizontal texture intensity. For example, such a block may satisfy the following conditions:

$$horMTV_t > Threshold(horMTV)_t$$

$$verMTV_t < \beta \cdot Threshold(verMTV)_t$$

where $0 < \beta < 1$.

In an event that vertical variation is large and horizontal variation is small, the prediction block is considered to have horizontal texture characteristics, and a horizontal smoothing low-pass filter may be selected to maintain vertical texture intensity.

In an event that diagonal variation is large and anti-diagonal variation is small, the prediction block is considered to have anti-diagonal texture characteristics, and a diagonal smoothing low-pass filter may be selected.

In an event that anti-diagonal variation is large and diagonal variation is small, the prediction block is considered to have diagonal texture characteristics, and an anti-diagonal smoothing low-pass filter may be selected.

Filters are selected for prediction blocks that satisfy corresponding threshold conditions. The threshold conditions may be evaluated sequentially. Once a suitable filter is determined, further evaluations may stop. If none of the threshold conditions are satisfied, a default non-directional filter may be used.

In other words, during the selection of the prediction boosting filter, the prediction boosting filter may be selected from at least one of filters corresponding to the following directions: a horizontal direction, a vertical direction, a diagonal direction, an anti-diagonal direction, and a non-directional filter.

According to a selected filter type and corresponding parameters, a filtering enhancement operation is performed on the current prediction block. During this process, the filtering enhancement operation adopts specific computation methods, and filtering may be performed according to different directions and strengths.

For example, a horizontal-direction filtering operation may be calculated as:

$$Pred'_C(x,y) = [Pred_C(x-1,y) + 2 \times Pred_C(x,y) + Pred_C(x+1,y) + 2] \gg 2$$

For example, a vertical-direction filtering operation may be calculated as:

$$Pred'_C(x,y) = [Pred_C(x,y-1) + 2 \times Pred_C(x,y) + Pred_C(x,y+1) + 2] \gg 2$$

For example, a diagonal-direction filtering operation may be calculated as:

$$Pred'_C(x,y) = [Pred_C(x-1,y-1) + 6 \times Pred_C(x,y) + Pred_C(x+1,y+1) + 4] \gg 3$$

For example, an anti-diagonal-direction filtering operation may be calculated as:

$$Pred'_C(x,y) = [Pred_C(x+1,y-1) + 6 \times Pred_C(x,y) + Pred_C(x-1,y+1) + 4] \gg 3$$

For example, a non-directional filtering operation may be calculated as:

$$Pred'_C(x, y) = [Pred_C(x-1, y-1) + Pred_C(x, y-1) + Pred_C(x+1, y-1) + Pred_C(x-1, y) + 8 \times Pred_C(x, y) + Pred_C(x+1, y) + Pred_C(x-1, y+1) + Pred_C(x, y+1) + Pred_C(x+1, y+1) + 8] \gg 4$$

At Step S240, reconstruct an image using the selected prediction boosting filter.

In this step, the prediction boosting filter selected in Step S230 is used to reconstruct the image. For example, the selected prediction boosting filter may be applied during generation of the chroma prediction block. Specifically, the reconstruction may be implemented using Method 1 or Method 2 described above in the chroma prediction block generation process, and therefore details are not repeated here.

In the image or video processing method proposed in the present disclosure, a prediction boosting filter is used for image reconstruction. Specifically, the method includes: obtaining statistical information of a current prediction block; updating filter thresholds based on the statistical information and previously determined filter thresholds; selecting a prediction boosting filter based on the updated filter thresholds; and reconstructing an image using the selected prediction boosting filter. Compared with the prior art that uses a single-strength isotropic low-pass filter (for example, LBCCP), embodiments of the present disclosure utilize statistical information of the prediction block (such as texture strength and direction characteristics) to select a more suitable filter. Consequently, better prediction gain can be achieved.

Embodiments of the present disclosure further provide an encoder, comprising a memory and a processor. The memory stores an image processing program. When the image processing program is executed by the processor, the method according to any one of the above embodiments is implemented.

Embodiments of the present disclosure further provide a decoder, comprising a memory and a processor. The memory stores an image processing program. When the image processing program is executed by the processor, the method according to any one of the above embodiments is implemented.

Embodiments of the present disclosure further provide a coding and decoding system, comprising an encoding device and a decoding device. The encoding device comprises a first processor configured to execute instructions to implement the method according to any one of the above embodiments. The decoding device comprises a second processor configured to execute instructions to implement the method according to any one of the above embodiments.

The present disclosure further provides a non-volatile storage medium storing an image processing program. When the image processing program is executed by a processor, the method according to any one of the above embodiments is implemented.

In embodiments of the encoder, the decoder, the coding and decoding system, and the storage medium provided in the present disclosure, all technical features of any of the above method embodiments may be included. Explanatory and extended content in the specification is substantially the same as that of the above method embodiments, and therefore will not be repeated herein.

Embodiments of the present disclosure further provide a computer program product comprising computer program code. When the computer program code is executed on a computer, the computer performs the method according to various possible implementations described above.

Embodiments of the present disclosure further provide a chip comprising a memory and a processor. The memory is configured to store a computer program, and the processor is configured to call and execute the computer program from the memory, so that a device installed with the chip performs the method according to various possible implementations described above.

It should be understood that the above scenarios are provided merely as examples and do not limit application scenarios of the technical solutions provided by embodiments of the present disclosure. The technical solutions of the present disclosure may also be applied to other scenarios. For example, those skilled in the art will understand that, with evolution of system architectures and emergence of new service scenarios, the technical solutions provided in embodiments of the present disclosure are also applicable to similar technical problems.

The numbering of the embodiments described above is provided only for descriptive purposes and does not indicate superiority or inferiority of the embodiments.

Steps in the methods of the embodiments of the present disclosure may be adjusted in sequence, combined, or deleted according to actual requirements.

Units in devices of the embodiments of the present disclosure may be combined, divided, or deleted according to actual requirements.

In the present disclosure, identical or similar terminology, technical solutions, and/or application scenarios are

generally described in detail when they first appear. When the same or similar terminology, technical solutions, and/or application scenarios appear again, they are not repeated for the sake of brevity. When understanding the technical solutions of the present disclosure, reference may be made to the earlier detailed descriptions.

Descriptions of the embodiments of the present disclosure each emphasize different aspects. Parts that are not described in detail in a particular embodiment may refer to relevant descriptions of other embodiments.

Technical features of the technical solutions of the present disclosure may be combined in any manner. For the sake of brevity, not all possible combinations of the technical features in the above embodiments are described. However, as long as combinations of these technical features do not conflict with each other, they shall be considered within the scope of the present disclosure.

From the descriptions of the above embodiments, those skilled in the art can clearly understand that the methods in the embodiments may be implemented by software combined with a necessary general hardware platform. Alternatively, the methods may be implemented entirely by hardware. However, in many cases the former is a preferred implementation. Based on such understanding, the technical solution of the present disclosure, or the part contributing to the prior art, may be embodied in the form of a software product. The computer software product may be stored in a storage medium (such as ROM, RAM, a magnetic disk, or an optical disk) and includes several instructions for enabling a terminal device (such as a mobile phone, computer, server, controlled terminal, or network device) to execute the methods of the embodiments of the present disclosure.

In the above embodiments, the implementations may be realized wholly or partially by software, hardware, firmware, or any combination thereof. When implemented using software, the implementations may be realized wholly or partially in the form of a computer program product. The computer program product includes one or more computer instructions. When the computer instructions are loaded and executed on a computer, the procedures or functions according to the embodiments of the present disclosure are produced wholly or partially. The computer may be a general-purpose computer, a special-purpose computer, a computer network, or another programmable device. The computer instructions may be stored in a storage medium or transmitted from one storage medium to another storage medium. For example, the computer instructions may be transmitted from one website, computer, server, or data center to another website, computer, server, or data center through wired means (such as coaxial cables, optical fibers, or digital subscriber lines) or wireless means (such as infrared, wireless, or microwave). The storage medium may be any available medium accessible by a computer or a data storage device such as a server or data center that integrates one or more available media. The available medium may include magnetic media (e.g., floppy disks, magnetic disks, magnetic tapes), optical media (e.g., DVDs), or semiconductor media (e.g., solid-state drives (SSD)), and the like.

The foregoing descriptions are merely embodiments of the present disclosure and are not intended to limit the scope of the present disclosure. Any equivalent structural transformation or equivalent process transformation made using the contents of the specification and drawings of the present disclosure, or directly or indirectly applied to other related technical fields, shall fall within the scope of protection of the present disclosure.

## Claims

**1.** A method for image or video processing, comprising:

obtaining a first candidate parameter list associated with a cross-component prediction merge mode (CCPMERGE), wherein the first candidate parameter list comprises a plurality of candidate parameters and at least one candidate parameter of the plurality of candidate parameters is associated with a prediction boosting filter (PBF); and

generating a chroma prediction block for a current block of the picture based on a selected candidate parameter from the first candidate parameter list.

**2.** The method according to claim 1, further comprising:

reordering candidate parameters in the first candidate parameter list according to a predetermined rule to obtain a second candidate parameter list,

wherein generating of the chroma prediction block comprises generating the chroma prediction block based on a candidate parameter selected from the second candidate parameter list.

**3.** The method according to claim 1 or 2, further comprising:

truncating the first candidate parameter list or the second candidate parameter list to obtain a third candidate parameter list,

wherein generating of the chroma prediction block comprises generating the chroma prediction block based on a candidate parameter selected from the third candidate parameter list.

**4.** The method according to claim 1, further comprising:

reordering the candidate parameters in the first candidate parameter list according to a predetermined rule and truncating the reordered candidate parameter list; or
truncating the first candidate parameter list and reordering the truncated candidate parameter list according to the predetermined rule.

**5.** The method according to claim 1, wherein the first candidate parameter list comprises prediction boosting filter indication information configured to indicate whether one or more candidate parameters in the first candidate parameter list are associated with the prediction boosting filter.

**6.** The method according to claim 1, further comprising:
determining whether a candidate parameter in the first candidate parameter list is associated with the prediction boosting filter, based on at least one of:

a coding mode of the candidate parameter;
a coding cost corresponding to a combination of the cross-component prediction merge mode and the prediction boosting filter; and
a statistical characteristic of a prediction block.

**7.** The method according to claim 6, wherein when the coding mode corresponds to a multi-model cross-component linear model (MM-CCLM) or a multi-model convolution cross-component model (MM-CCCM), the method determines whether the candidate parameter supports the prediction boosting filter.

**8.** The method according to claim 6, wherein:

when the coding cost of the candidate parameter is smaller than one or more thresholds, the candidate parameter is used without the prediction boosting filter; and/or
when the coding cost falls within different threshold intervals, different prediction boosting filters are applied.

**9.** The method according to claim 8, wherein the coding cost is calculated based on a sum of absolute differences between a result obtained by applying the prediction boosting filter to a reference region of a trial reconstructed chroma image generated using the candidate parameter and a corresponding reference region of an actually reconstructed chroma image.

**10.** The method according to claim 6, wherein when the statistical characteristic of the prediction block is smaller than one or more thresholds, the candidate parameter is used without the prediction boosting filter; and/or
when the statistical characteristic falls within different threshold intervals, different prediction boosting filters are applied.

**11.** The method according to claim 2, wherein reordering of the candidate parameters comprises sorting the candidate parameters according to coding costs associated with candidate parameters using the prediction boosting filter and candidate parameters not using the prediction boosting filter.

**12.** The method according to claim 2, wherein reordering of the candidate parameters comprises:

dividing the candidate parameters into different candidate parameter sets;
applying different sorting rules to the candidate parameter sets; and
merging the candidate parameters from the candidate parameter sets after sorting.

**13.** The method according to claim 3, wherein truncating of the first candidate parameter list or the second candidate parameter list comprises determining whether a candidate parameter is included in the third candidate parameter list based on a coding cost threshold.

**14.** The method according to claim 3, wherein truncating of the first candidate parameter list or the second candidate

parameter list comprises determining whether a candidate parameter is included in the third candidate parameter list based on a length of the candidate parameter list.

**15.** The method according to claim 1, wherein when the selected candidate parameter is associated with the prediction boosting filter, the method further comprises:

generating a chroma prediction result based on the selected candidate parameter; and
applying the prediction boosting filter to the chroma prediction result to generate the chroma prediction block.

**16.** The method according to claim 1, wherein when the selected candidate parameter is associated with the prediction boosting filter, the method further comprises:

applying the prediction boosting filter to a luma block; and
generating the chroma prediction block based on the luma block to which the prediction boosting filter is applied and the selected candidate parameter.

**17.** An encoder comprising a processor configured to execute instructions to perform the method according to any one of claims 1 to 16.

**18.** A decoder comprising a processor configured to execute instructions to perform the method according to any one of claims 1 to 16.

**19.** A encoding and decoding system comprising an encoding device and a decoding device, wherein the encoding device comprises a first processor configured to execute instructions to perform the method according to any one of claims 1 to 16, and
the decoding device comprises a second processor configured to execute instructions to perform the method according to any one of claims 1 to 16.

**20.** A method for image or video processing, comprising:

obtaining statistical information of a current prediction block;
updating a filter threshold based on the statistical information and a previously determined filter threshold;
selecting a prediction boosting filter based on the updated filter threshold; and
reconstructing the picture using the selected prediction boosting filter.

**21.** The method according to claim 20, wherein the statistical information comprises variation degrees of the current prediction block in a horizontal direction, a vertical direction, a diagonal direction, and/or an anti-diagonal direction.

**22.** The method according to claim 20, wherein the filter threshold is dynamically adjusted using an exponential moving average method.

**23.** The method according to claim 20, wherein selecting of the prediction boosting filter comprises:

comparing the statistical information of the current prediction block with the updated filter threshold; and
selecting the prediction boosting filter based on a comparison result.

**24.** The method according to claim 23, wherein the prediction boosting filter is selected from at least one of: a horizontal filter, a vertical filter, a diagonal filter, an anti-diagonal filter, and a non-directional filter.

**25.** An encoder comprising a processor configured to execute instructions to perform the method according to any one of claims 20 to 24.

**26.** A decoder comprising a processor configured to execute instructions to perform the method according to any one of claims 20 to 24.

**27.** A encoding and decoding system comprising an encoding device and a decoding device, wherein the encoding device comprises a first processor configured to execute instructions to perform the method according to any one of claims 20 to 24, and

the decoding device comprises a second processor configured to execute instructions to perform the method according to any one of claims 20 to 24.

110
Video Encoding System
1101
Block partitioning
1112
1102
Transform and quantization
Quantized coefficients
1107
Inverse transform and dequantization
1103
Intra-frame estimation
1108
Filter control and analysis
1110
Encoding
Output bitstream
1104
Intra-frame prediction
1109
Loop filters
Filter control data
1105
Motion compensation
Intra-frame prediction data
Motion data
1106
Motion estimation
Image buffer
Output videos
1111

FIG. 1A

120
Video Decoding System
1204
Motion compensation
Intra prediction
1203
1206
Loop filters
Image buffer
1205
Input bitstream
Decoding
Inverse transform and dequantization
Post filters
1201
1202
1207
Input bitstream

FIG. 1B

Color image (each grid represents one pixel)
307
304
301
Y
Decomposition
305
306
302
Cb
303
Cr

FIG. 2

Luma component (Y)
Downsampling to match the resolution of chroma components
404
402
401
403

Chroma component (Cr or Cb)
408
406
405
407

FIG. 3

MM-CCLM / MM-CCCM chroma prediction block
1 1 1
1 8 1
1 1 1
/16
Local enhancement filtering
Filtered chroma prediction block


FIG. 4

Other prediction modes are Not used
Whether to use cross-component prediction fusion mode
No
Other prediction modes are Not used
Whether to use cross-component prediction mode
No
Use other prediction modes
Yes
Yes
Cross-component prediction fusion mode
Deriving a cross-component prediction candidate parameter list from reconstructed samples and predefined configurations
Reordering the cross-component prediction candidate parameter list
Obtaining an index of a selected cross-component prediction candidate parameter
Generating a chroma prediction block using the selected candidate parameter
Cross-component prediction mode
Cross-component prediction (CCP)
Whether to use MM-CCLM or MM-CCCM
Whether to use LBCCP
Generating a chroma prediction block using a corresponding prediction method, and performing filtering when LBCCP is used
Prediction completed
Prediction completed


FIG. 5

Obtaining a first candidate parameter list, wherein the first candidate parameter list is a candidate parameter list of a cross-component prediction merge mode (CCPMERGE), the first candidate parameter list comprises a plurality of candidate parameters, and at least one of the plurality of candidate parameters includes a prediction boosting filter (PBF) parameter.
S110
Performing prediction on chroma information of a current block in an image based on a selected candidate parameter to generate a chroma prediction block.
S120

FIG. 6

Obtaining a first candidate parameter list, wherein the first candidate parameter list is a candidate parameter list of a cross-component prediction merge mode (CCPMERGE)
S110
Reordering candidate parameters in the first candidate parameter list according to a predetermined rule
S130'
Truncating the reordered candidate parameter list
S140'
Performing prediction on chroma information of a current block in an image based on a selected candidate parameter to generate a chroma prediction block
S120

FIG. 7

Obtaining a first candidate parameter list, wherein the first candidate parameter list is a candidate parameter list of a cross-component prediction merge mode (CCPMERGE)
S110
Truncating the first candidate parameter list
S140'Γ
Reordering the truncated candidate parameter list according to a predetermined rule
S130"
Performing prediction on chroma information of a current block in an image based on a selected candidate parameter to generate a chroma prediction block
S120

FIG. 8

Other prediction modes are Not used
Whether to use cross-component prediction fusion mode
No
Yes
Other prediction modes are Not used
Whether to use cross-component prediction mode
No
Use other prediction modes
Yes
Cross-component prediction fusion mode
Deriving a cross-component prediction candidate parameter list from reconstructed samples and predefined configurations
Calculating coding costs before and after applying a prediction boosting filter (PBF), and reordering the candidate parameter list
Obtaining an index of a selected cross-component prediction candidate parameter
Generating a chroma prediction block using the selected candidate parameter, where when a prediction boosting filter is applied, filtering is performed or a corresponding filter is derived based on statistical information
Prediction completed
Cross-component prediction mode
Cross-component prediction (CCP)
Whether to use MM-CCLM or MM-CCCM
Whether to use a prediction boosting filter (PBF)
Generating a chroma prediction block using a corresponding prediction method, where when a prediction boosting filter is applied, filtering is performed or a corresponding filter is derived based on statistical information
Prediction completed

FIG. 9

Cross-component prediction merge candidate parameter indices
1 2 3 4 5 6 7 8 9 10 11 12
Adding a "use PBF" parameter for each candidate parameter
1 1 2 2 3 3 4 4 5 5 6 6 7 7 8 8 9 9 10 10 11 11 12 12
0 1 0 1 0 1 0 1 0 1 0 1 0 1 0 1 0 1 0 1 0 1 0 1
Whether the candidate parameter index uses PBF

FIG. 10

1 2 3 4 5 6 7 8 9 10 11 12
Cross-component prediction candidate parameter indices
The highlighted candidate parameters use MM-CCLM or MM-CCCM
Whether the candidate parameter index uses PBF
1 2 2 3 3 4 5 6 6 7 8 8 9 10 10 11 11 12
0 0 1 0 1 0 0 0 1 0 0 1 0 0 1 0 1 0
Expanding the list to include candidate parameters with PBF applied
1 2 3 4 5 6 7 8 9 10 11 12 13 14 15 16 17 18
Reordering in ascending order of coding cost and reassigning index numbers
1 2 3 4 5 6 7 8 9 10 11 12 13 14 15 16 17 18
Truncating to maintain the total list length

FIG. 11

1 2 3 4 5 6 7 8 9 10 11 12
Cross-component prediction candidate parameter indices
The highlighted candidate parameters use MM-CCLM or MM-CCCM
Whether the candidate parameter index uses PBF
1 2 3 4 5 6 7 8 9 10 11 12
0/1 0/1 0/1 0/1 0/1 0/1
Determining whether a PBF is used for each MM-CCLM or MM-CCCM candidate parameter based on neighboring regions
1 2 3 4 5 6 7 8 9 10 11 12
0 1 0 1 1 0
Since whether PBF is used for each MM-CCLM or MM-CCCM candidate parameter can be derived at the decoder side, this information does not need to be signaled in the bitstream
1 2 3 4 5 6 7 8 9 10 11 12
Reordering the cross-component prediction candidate list

FIG. 12

1 2 3 4 5 6 7 8 9 10 11 12 13 14 15 16 17 18
Reordering in ascending order of coding cost and reassigning index numbers
1 2 3 4 5 6 7 8 9 10 11 12 13 14 15 16 17 18
Truncating to maintain the total list length

FIG. 13

S210
Obtaining statistical information of a current prediction block
S220
Updating a filter threshold based on the statistical information and a previously determined filter threshold
S230
Updating a filter threshold based on the statistical information and a previously determined filter threshold
S240
Selecting a prediction boosting filter based on the updated filter threshold

FIG. 14

**INTERNATIONAL SEARCH REPORT**

International application No. **PCT/CN2023/123115**

**A. CLASSIFICATION OF SUBJECT MATTER**

H04N19/117(2014.01)i; H04N19/103(2014.01)i; H04N19/70(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, ENTXTC, ENTXT, DWPI, IEEE, JVET, CNKI: 跨分量预测融合模式, 融合模式, 交叉分量预测, 候选, 列表, 预测加强滤波, 色度, 亮度, 重新排序, 排序, 编码模式, 代价, 统计, 截断, 截短, 长度, 阈值, 多模型跨分量线性模型, 多模型卷积跨分量模型, 跨分量预测局部加强, 滤波, cross-component prediction merge mode, CCPMERGE, merge mode, cross-component prediction, CCP, candidate, list, prediction boosting filter, PBF, chroma, luma, reorder, order, coding mode, cost, statistic, truncation, prun, length, threshold, multi-model cross-component linear model, MM-CCLM, Multi-Model CCLM, multi-model convolutional cross-component model, MM-CCCM, Multi-Model CCCM, cross-component prediction local boosting, filter

**C. DOCUMENTS CONSIDERED TO BE RELEVANT**

| Category* | Citation of document, with indication, where appropriate, of the relevant passages | Relevant to claim No. |
|---|---|---|
| X | HUANG, Hang et al. "Non-EE2: Improvement on Cross-Component Prediction Merge Mode" *Joint Video Experts Team (JVET) of ITU-T SG 16 WP 3 and ISO/IEC JTC 1/SC 29, 31st Meeting, Geneva, CH, 11-19 July 2023, JVET-AE0074-v2,* 13 July 2023 (2023-07-13), abstract, and sections 1-2 | 1-5, 11-19 |
| A | HUANG, Hang et al. "Non-EE2: Improvement on Cross-Component Prediction Merge Mode" *Joint Video Experts Team (JVET) of ITU-T SG 16 WP 3 and ISO/IEC JTC 1/SC 29, 31st Meeting, Geneva, CH, 11-19 July 2023, JVET-AE0074-v2,* 13 July 2023 (2023-07-13), abstract, and sections 1-2 | 6-10 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 June 2024** | **19 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/123115**

**C. DOCUMENTS CONSIDERED TO BE RELEVANT**

| Category* | Citation of document, with indication, where appropriate, of the relevant passages | Relevant to claim No. |
|---|---|---|
| A | TSAI, Chia-Ming et al. "Non-EE2: Cross-Component Merge Mode for Chroma Intra Coding" *Joint Video Experts Team (JVET) of ITU-T SG 16 WP 3 and ISO/IEC JTC 1/ SC 29, 29th Meeting, by teleconference, 11-20 January 2023, JVET-AC0315-v2,* 16 January 2023 (2023-01-16), entire document | 1-19 |
| A | DENG, Zhipin et al. "EE2-1.3: Local-Boosting Cross-Component Prediction" *Joint Video Experts Team (JVET) of ITU-T SG 16 WP 3 and ISO/IEC JTC 1/SC 29, 30th Meeting, Antalya, TR, 21-28 April 2023, JVET-AD0120-v1,* 21 April 2023 (2023-04-21), entire document | 1-19 |
| A | US 2022312020 A1 (BEIJING BYTEDANCE NETWORK TECH CO., LTD. et al.) 29 September 2022 (2022-09-29) entire document | 1-19 |
| A | CN 116366837 A (MEDIATEK INC.) 30 June 2023 (2023-06-30) entire document | 1-19 |

Form PCT/ISA/210 (second sheet) (July 2022)

**INTERNATIONAL SEARCH REPORT**

International application No.
**PCT/CN2023/123115**

**Box No. III Observations where unity of invention is lacking (Continuation of item 3 of first sheet)**

This International Searching Authority found multiple inventions in this international application, as follows:

The first group of claims (claims 1 and 17-19) and the second group of claims (claims 20 and 25-27) do not share a same or corresponding technical feature, and accordingly also do not share a same or corresponding special technical feature, do not have a technical relationship therebetween, do not belong to a single general inventive concept, and thus do not comply with PCT Rule 13.1.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-19**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/CN2023/123115**

| Patent document cited in search report | Publication date (day/month/year) | Patent family member(s) | Publication date (day/month/year) |
|---|---|---|---|
| US 2022312020 A1 | 29 September 2022 | WO 2021115235 A1 | 17 June 2021 |
| CN 116366837 A | 30 June 2023 | TW 202327351 A | 01 July 2023 |
| | | US 2023209042 A1 | 29 June 2023 |

Form PCT/ISA/210 (patent family annex) (July 2022)